# EUROPEAN PATENT SPECIFICATION

(11) **EP 2 543 572 B1**
(45) Date of publication and mention of the grant of the patent: **17.09.2014**
(21) Application number: 11172762.4
(22) Date of filing: 05.07.2011
(51) Int. Cl.: B62D 21/15, B60R 19/16

(54) **A Motor Vehicle Safety Device**
Kraftfahrzeugsicherheitsvorrichtung
Dispositif de sécurité de véhicule à moteur

(43) Date of publication of application: 09.01.2013
(73) Proprietor: Autoliv Development AB, 447 83 Vårgårda (SE)
(72) Inventor: Pipkorn, Bengt, SE-447 83 Vårgårda (SE); Haland, Yngve, SE-447 83 Vårgårda (SE)
(74) Representative: Parry, Simon James

(56) References cited:
- WO-A1-2005/110815
- WO-A1-2006/086818
- WO-A2-2007/101285
- JP-A- 2004 306 871
- US-A1- 2005 110 284

## Description

The present invention relates to a motor vehicle safety device, and more particularly to a motor vehicle safety device operable in the event of an impact between the vehicle and an external object, such as another motor vehicle, or an item of street furniture such as a lamppost or wall.

It is well known that when a motor vehicle is involved in a frontal impact with an external object such as another motor vehicle or an immovable object, significant forces are transmitted to the vehicle's structure. Considerable work has therefore been carried out on safely managing such crash forces in order to dissipate the energy involved in a crash and hence decelerate the passenger cabin of the vehicle more gradually, thereby reducing the risk of serious injury to the occupants of the vehicle. For example, all modern motor vehicles now have very carefully designed and engineered crumple zones at the front (and indeed also at the rear) which are designed to crumple upon impact with an external object, thereby absorbing crash energy.

Whilst most modern motor vehicles are carefully designed to offer good crumple zone performance in a so-called head-on frontal impact, some can be less effective in the event that the vehicle is involved in a so-called "small overlap" frontal impact or an oblique frontal impact, in which a front corner of the vehicle collides with the object. In these sorts of accidents, it has been found that the external object can penetrate the structure of the motor vehicle in a way which offers less than optimum absorption of the crash energy.

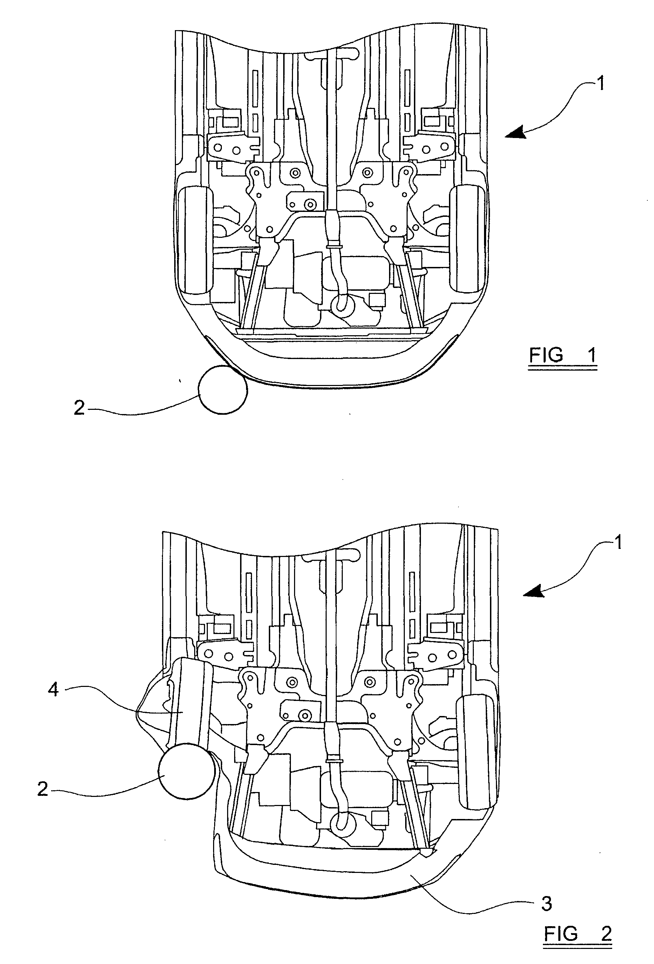

Another particular problem which has been found to arise in such impacts is where the object penetrates the bodywork and/or structure of the vehicle so as to come into contact with one of the vehicle's front wheels. When this happens, the impact between the object and the wheel can cause the wheel to be pushed inwardly towards the passenger compartment of the vehicle, and in some cases the wheel can penetrate the compartment and cause significant deformation of the vehicle's A-pillar. Figures 1 to 4 are included to illustrate this problem, and show successive stages during an impact between the front corner region of a motor vehicle 1 and an external object such as a pole 2.

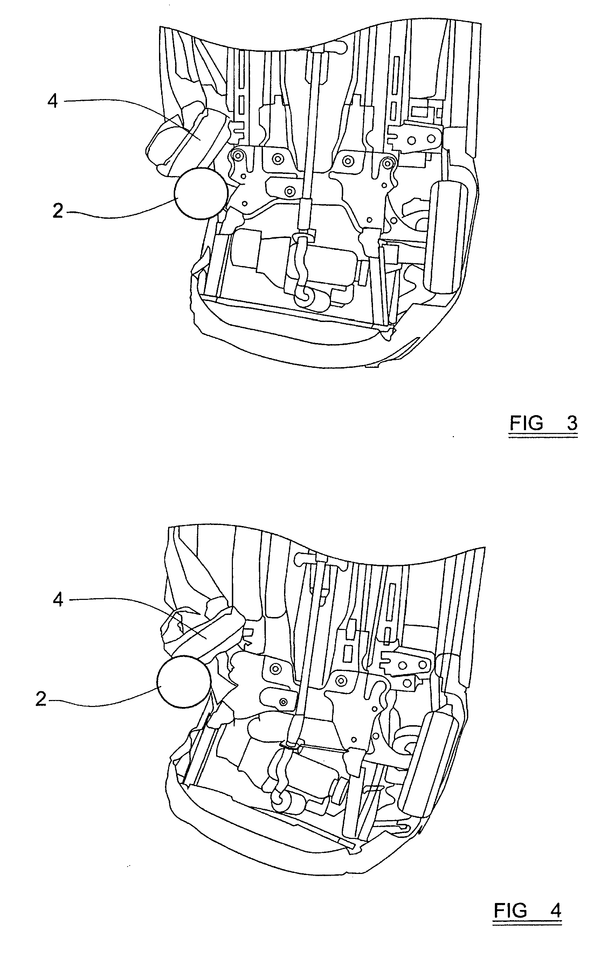

Figure 1 illustrates the vehicle 1 (as viewed from below) making initial contact with the pole 2. Figure 2 shows the vehicle after further movement towards the pole 2, and in particular shows the pole 2 having penetrated through the front bumper or fender 3 of the vehicle so as to make contact with the front wheel 4 of the vehicle. Figures 3 and 4 show successive stages in the impact, and in particular illustrate how contact between the pole 2 and the wheel 4 can result in the wheel being pushed rearwardly and inwardly towards the passenger compartment of the vehicle, and in particular beneath the lower end of the vehicle's A-pillar. This sort of inward intrusion of the front wheel into the vehicle can represent a very significant risk to the adjacent front seat occupant of the vehicle.

WO 2006/086818 A1 discloses a deflector device according to the preamble of claim 1.

It is therefore an object of the present invention to provide an improved motor vehicle safety device.

According to the present invention, there is provided a motor vehicle safety arrangement operable in the event of an impact between the vehicle and an external object, the arrangement comprising: an impact guide mounted to the structure of the vehicle in a front region of the vehicle, the impact guide being configured for actuation from a first configuration to a second configuration in response to an actuation signal from a crash sensor, and wherein when the impact guide is in its actuated second configuration it presents a guide surface for impact with the external object, the guide surface facing outwards and extending rearwards at an acute angle relative to the central longitudinal axis of the vehicle, the safety arrangement being characterised in that the impact guide is mounted to the structure of the vehicle (1) at a position located within a fender or bumper (3) of the vehicle (1) and when in its second configuration part of the impact guide (9) extends rearwards past the forward-most surface (22) of the front wheel (4).

Preferably, the safety arrangement is specifically configured for operation in the event of a so-called small overlap frontal impact between the vehicle and the external object.

As will thus be appreciated, because the safety arrangement of the present invention is actuated in response to an actuation signal from a crash sensor, it is what is commonly known in the art as an "active" system in the sense that it is actively actuated, rather than a passive system which might, for example, actuate in a purely mechanical way when stuck by the external object.

Conveniently, the guide surface is substantially smooth along its length.

Preferably, actuation of the impact guide involves a component of sideways movement of at least part of the impact guide, away from the central longitudinal axis of the vehicle.

Advantageously, the impact guide comprises an elongate guide member and is configured such that actuation from said first configuration to said second configuration comprises movement of the elongate guide member along its longitudinal axis.

Conveniently, the longitudinal axis of the guide member is arranged at an acute angle relative to the central longitudinal axis of the vehicle, such that movement of the guide member during actuation of the impact guide is outwards and rearwards relative to vehicle.

Preferably, the elongate guide member is arranged for telescopic movement relative to a housing part of the impact guide.

Advantageously, said part of the impact guide is said elongate guide member.

The impact guide is mounted to the structure of the vehicle at a longitudinal position in front of a front wheel of the vehicle.

Preferably, upon actuation of the impact guide at least part of the impact guide extends or projects outwardly from the fender or bumper.

Advantageously, the arrangement further comprises an actuator operably connected to a crash sensor and configured to actuate the impact guide (5) upon receipt of a crash signal from the sensor. The actuator may comprise at least one of: a pyrotechnic charge, a gas generator, or a mechanical biasing and release mechanism, and may optionally be reversible or resettable.

Preferably, the arrangement further comprises a crash sensor, wherein the crash sensor is either i) an impact sensor configured to detect the occurrence of an impact involving the motor vehicle, or ii) a predictive crash sensor configured to detect the likely occurrence of an impact involving the motor vehicle.

Advantageously, the safety arrangement further comprises a pair of said impact guides, each said impact guide being mounted on a respective side of the motor vehicle.

So that the invention may be more readily understood, and so that further features thereof may be appreciated, an embodiment of the invention will now be described by way of example with reference to the accompanying drawings in which:
Figure 1 (discussed above) is a schematic illustration showing the front part of a motor vehicle, as viewed from below, at the instant of initial impact with an external object;
Figure 2 (discussed above) is a view corresponding generally to that of figure 1, but which shows the vehicle at a subsequent stage during the crash;
Figure 3 (discussed above) is a similar illustration showing a still further stage during the crash;
Figure 4 (discussed above) is another similar illustration showing a final stage during the crash;
Figure 5 is a perspective view of the front corner region of a motor vehicle, with its bumper/fender removed for clarity, and fitted with a safety arrangement in accordance with the present invention;
Figure 6 is an enlarged perspective view showing an impact guide of the safety arrangement;
Figure 7 is a view similar to that of figure 5, but which shows the vehicle with its bumper/fender fitted over the safety arrangement;
Figure 8 is a schematic illustration showing the motor vehicle from below, with the safety arrangement in a first, un-actuated, configuration;
Figure 9 is a view corresponding generally to that of figure 8, but which shows the safety arrangement in a second, actuated, configuration;
Figure 10 is a view corresponding generally to that of figure 5, but which shows the safety arrangement in the actuated configuration of figure 9;
Figure 11 is a view corresponding generally to that of figure 9, but which shows the safety arrangement at a subsequent stage in its actuation, and during an impact between the vehicle and an external object (not shown);
Figure 12 is a view corresponding generally to that of figure 10, but which shows the safety arrangement in the configuration of figure 11;
Figure 13 is a view corresponding generally to that of figure 8, but which shows the arrangement in the configuration of figures 11 and 12, and which also shows the external object schematically;
Figure 14 is a view corresponding generally to that of figure 13, but which shows the arrangement at a subsequent stage during the impact with the external object; and
Figure 15 is a view corresponding generally to that of figure 14, showing the arrangement at a final stage during the impact.

Turning now to consider figures 1 to 15, the safety arrangement of the present invention will be described in detail.

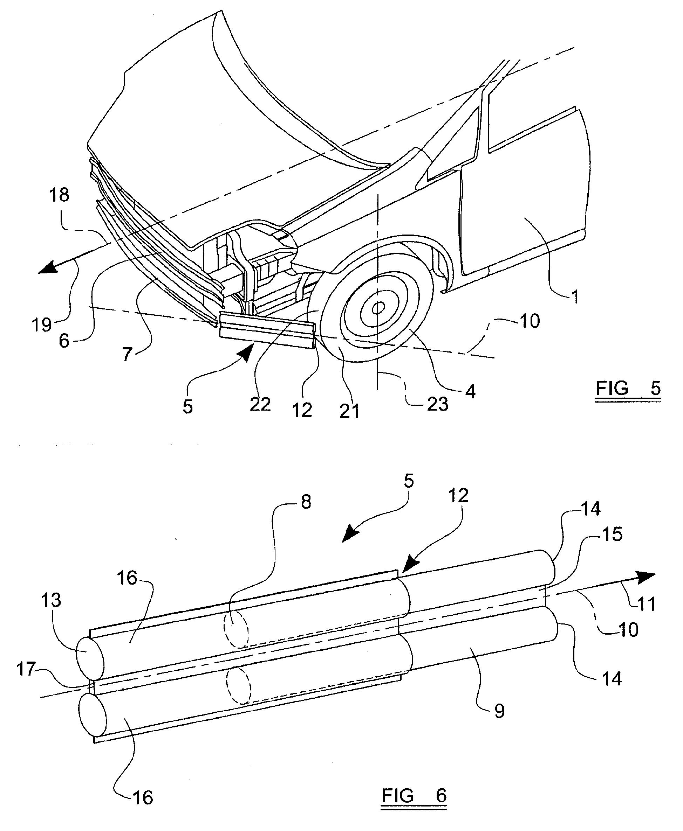

Figure 5 shows the front part of a motor vehicle 1 fitted with a safety arrangement in accordance with the invention. As will be noted, the bumper/fender of the motor vehicle is shown removed in figure 5, so that the structure of the vehicle behind the bumper/fender can be seen. The safety arrangement comprises an impact guide arrangement 5 which is generally elongate and is mounted to the front corner structure of the motor vehicle at a position in front of the adjacent front wheel 4. More particularly it will be noted that, as is generally conventional, the structure of the vehicle comprises a pair of generally parallel transverse beams 6, 7 which extend in spaced relation across the front of the engine compartment and behind the front bumper/fender (not shown in figure 5). It is proposed that in certain embodiments, the impact guide 5 will be mounted to the end of the lower transverse beam 7 as shown in figure 5. The impact guide is preferably mounted to the structure of the motor vehicle at a single mounting point, there being no additional supporting struts or braces between the structure of the vehicle and the impact guide 5.

The impact guide 5 is shown in more detail in figure 6 and comprises an elongate housing 8, within which an elongate guide member 9 of substantially equal length is received as a close sliding fit, the guide member 9 thus being slideable relative to the housing 8 in a telescopic manner along its longitudinal axis 10, as denoted by arrow 11. As will be appreciated, figure 6 shows the guide member 9 partially withdrawn from an open end 12 of the housing 8 such that a length of the guide member 9 projects from the housing 8. The opposite end 13 of the housing 8 is closed.

The housing 8 and the guide member 9 are preferably formed from metal such as, for example, steel, stainless steel or aluminium. However, it is envisaged that other high tensile materials could be used instead.

The particular impact guide 5 illustrated in the drawings is formed such that both the housing 8 and the guide member 9 present a corrugated external surface. In particular, it will be noted that the guide member takes the form of a pair of substantially cylindrical rods or tubes 14 which are parallel and spaced apart from one another by an interconnecting web 15. The housing 8 is similarly shaped so as to receive the guide member 9 as a close sliding fit, and thus has a cross sectional profile resembling an "hour-glass" shape or a "figure of eight" shape defined by a pair of cylindrical tubes 16 sized to slideably receive the rods or tubes 14 of the guide member 9, and an interconnecting channel 17 sized to slideably receive the web 15 of the guide member 9. As will thus be seen from figure 6, the resulting corrugated profile of the housing 8 and the guide member 9 somewhat resembles the profile of a conventional crash barrier, such as those commonly known as "Armco" barriers. Furthermore, the corrugated profile of the housing 8 and the guide member 9 provides an increase in their bending strength, in a similar manner to that achieved in the aforementioned crash barriers. It is relevant also to note that despite their corrugated profile, the external surfaces of both the housing 8 and the guide member 9 are substantially smooth and free of projections or recesses along their length.

Returning now to consider figure 5, it will be noted that the impact guide 5 is mounted to the structure of the vehicle such that its longitudinal axis 10 makes an acute angle to the central longitudinal axis 18 of the vehicle, and such that its open end 12 is directed outwardly and rearwardly relative to the driving direction 19 of the vehicle.

It is proposed to provide the impact guide arrangement 5 with an actuator (not shown) which is operably (for example electronically) connected to a crash sensor (also not shown). In this regard, it is to be appreciated that the crash sensor could either be provided in the form of an impact sensor configured to detect the actual occurrence of an impact involving the motor vehicle, or could alternatively be provided in the form of a predictive "pre-crash" sensor configured to detect the likely or possible occurrence of an impact involving the motor vehicle.

The actuator is arranged to receive a signal from the or each sensor in the event that a crash or likely crash involving the motor vehicle is detected, and thereupon to actuate the impact guide 5 so as to drive its guide member 9 from its initial retracted position illustrated in figure 5 in which it is housed substantially completely within the housing 8, outwardly and rearwardly along its axis 10 as denoted by arrow 11 in figure 6, towards an actuated configuration in which it extends from the open end 12 of the housing 8. This linear displacement of the guide member 9 upon actuation, which will be described in more detail hereinafter, can be achieved in a number of different ways. One possibility is for the actuator to comprise a pyrotechnic charge, for example in the form of a squib, which is ignited upon receipt of an actuation signal, and which then serves to drive the guide member 9 in its rearward and outward direction 11 relative to the housing 8 in the manner of a piston. The actuator could furthermore comprise a gas generator arranged to be triggered by ignition of the pyrotechnic charge to direct a high pressure flow of gas into the closed end of the housing 13 and hence drive the guide member 9 in direction 11. It is to be appreciated, however, that other forms of actuator arrangements could be used instead such as, for example, mechanical arrangements which may comprise a biasing mechanism (for example comprising one or more springs) arranged to urge the guide member 9 towards its actuated position, and a release mechanism arranged to initially retain the guide member 9 in its retracted position but to release it for movement under the action of the biasing mechanism upon actuation. The actuator arrangement may be configured to be reversible or resettable after actuation.

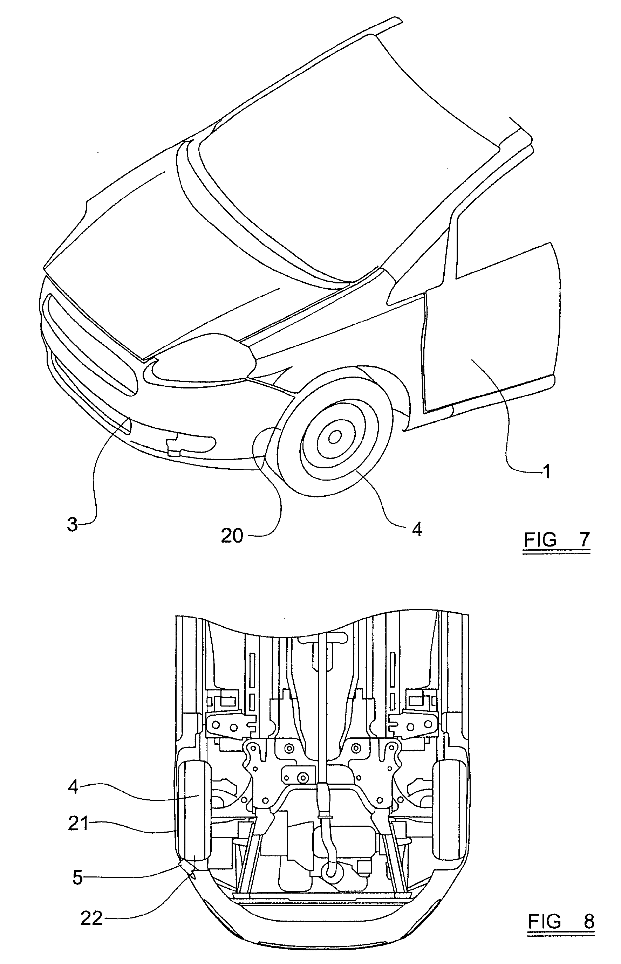

Figure 7 shows the vehicle 1 with its front bumper/fender 3 replaced. It can thus be seen that the impact guide arrangement 5 is mounted the structure of the vehicle in such a manner as to be located behind or within the bumper/fender 3, and in particular behind a side part of the bumper/fender, just in front of the front wheel arch 20.

Figure 8 shows the vehicle 1 as viewed from below, and in particular shows the initial position of the outer end of the impact guide 5 in its unactuated configuration. As will be noted from figure 8, and also from figure 5, in its unactuated configuration, the outer and rearmost end of the impact guide (effectively defined by the end of the guide member 9 which is initially substantially aligned with the open end 12 of the housing 8) is provided in substantial alignment, or slightly inward of the outermost surface 21 of the front wheel 4. In this context it is relevant to note that the term "wheel" is used herein to refer collectively to both the tyre and the metal rim on which the tyre is mounted. Furthermore, the outer and rearmost end of the impact guide 5 is also spaced slightly in front of the forward-most surface 22 of the wheel 4. This ensures that the wheel is free to rotate about its axis, and also to be steered about a vertical axis (denoted 23 in figure 5) without touching or being in any way impeded by the impact guide 5. Nevertheless, the outer end of the impact guide 5 can be considered to lie proximate to the wheel 4 in its unactuated configuration.

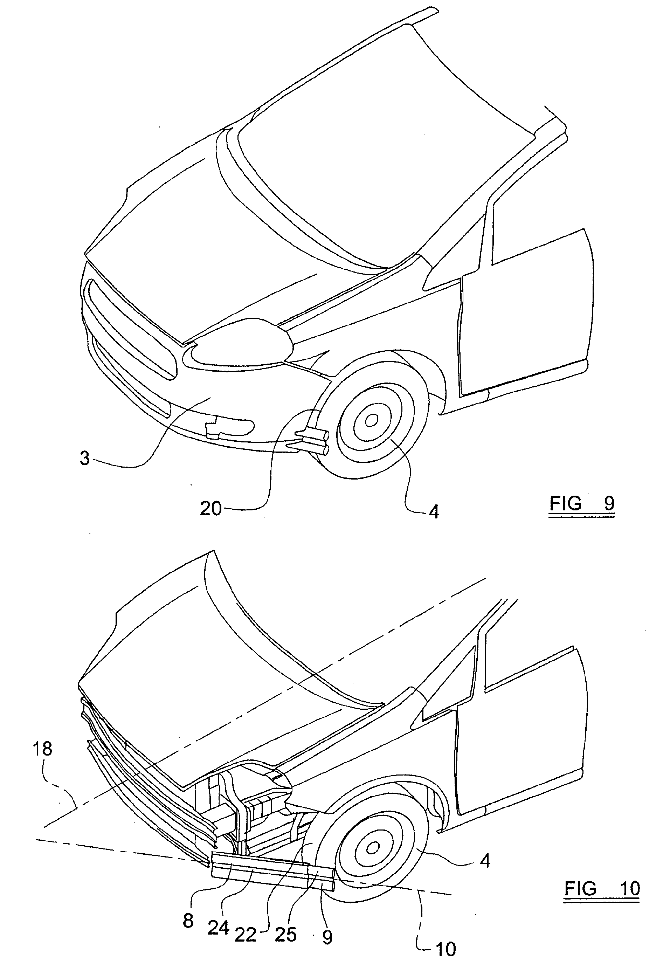

Turning now to consider figures 9 and 10, the safety arrangement of the invention is shown after an initial stage of deployment following actuation. As can be seen, actuation of the impact guide 5 is effective to drive the guide member 9 outwardly and rearwardly relative to the vehicle, along its axis 10 so that it extends outwardly from the open end 12 of the housing 8. Because of the angle at which the impact guide 5, and in particular its housing 8 is mounted to the structure of the vehicle, actuation of the impact guide 5 in this manner results in the guide member 9 extending transversely past the outermost surface 21 of the wheel 4 thereby effectively widening the frontal extent of the vehicle, and also rearwards past the forward-most surface of the wheel.

As shown in figure 9, when the guide member 9 is driven outwardly and rearwardly in this manner it projects outwardly from the bumper/fender 3. In some arrangements it is proposed that the guide member 9 will be driven so as to extend outwardly through the gap defined between the wheel arch part 20 of the bumper and the front wheel 4. In other arrangements, the bumper/fender 3 may be provided with an opening (not shown, but for example disguised as an air inlet or vent opening) through which the guide member 9 may extend when actuated. In each of these proposals, actuation of the impact guide 5 will not, in itself, damage the fender/bumper 3 which is advantageous in the event of a false actuation not involving an impact or crash. However, in other arrangements, the impact guide and the bumper/fender may be arranged so that the guide member 9 punctures the bumper/fender as it is driven outwardly upon actuation.

As illustrated most clearly in figure 10, and remembering that the bumper/fender 3 on account of typically being formed from relatively flexible plastic material is very easily deformed and/or fractured upon impact with an external object in a crash, the deployed impact guide 5 serves to provide a barrier in front of the front wheel 4 of the vehicle to protect the wheel from impact with the external object in the manner described in the introduction with reference to figures 1 to 4. Furthermore, both the housing 8 and the extended guide member 9 present respective smooth guide surfaces 24, 25 for impact with the external object, the guide surfaces being free of any projections or discontinuities which might represent an impediment to the smooth sliding movement of the external object along them. As will be noted, the guide surface 25 defined by the extended guide member 9 effectively forms an extension of the guide surface 24 defined by the housing 8. Both guide surfaces 24, 25 thus face outwards and extend rearwards at an acute angle relative to the central longitudinal axis of the vehicle.

It is preferable for the guide member 9 to move into the actuated position illustrated in figure 10 (i.e extending transversely and rearwardly past the front outer edge of the wheel 4) before the external object 2 penetrates or deforms the bumper/fender 3 so as to make contact with the impact guide 5. In arrangements where a so-called "pre-crash" sensor is used to provide the actuating signal upon detection of a likely crash being about to occur, it is even possible via swift actuation of the impact guide 5 to move the guide member 9 to this actuated position before the object 2 even makes contact with the bumper/fender 3.

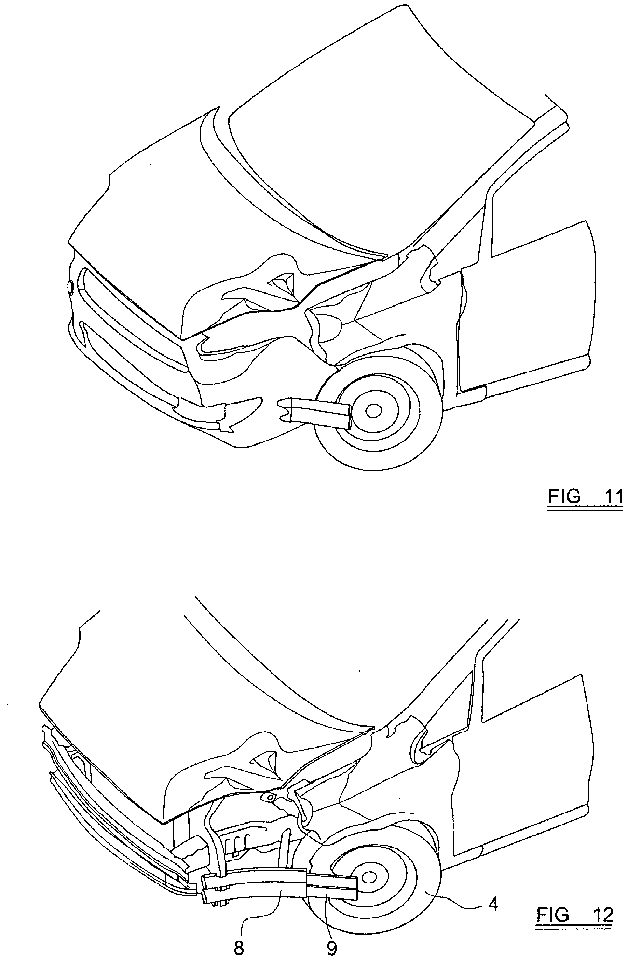

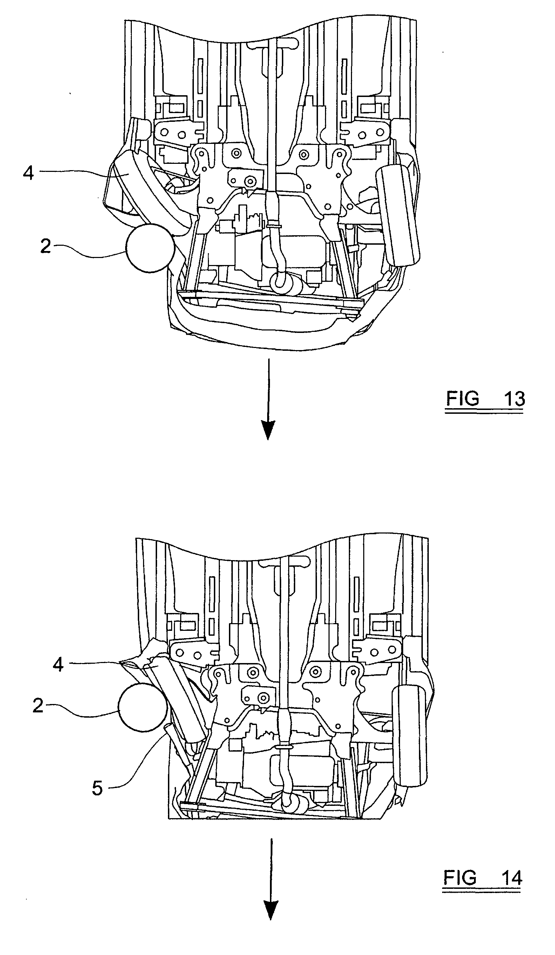

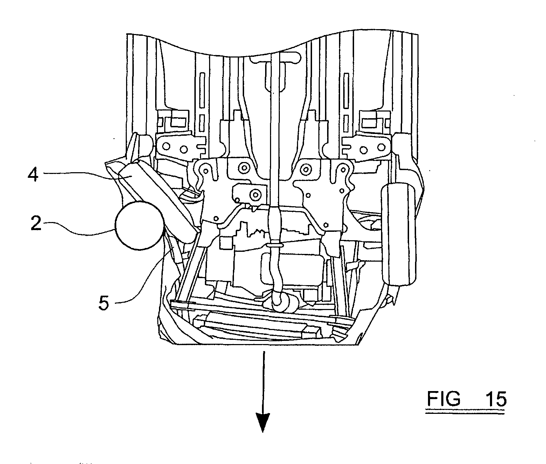

Turning now to consider figures 11 to 15, the effect of the impact guide 5 in a frontal impact with an external object such as a pole or lamppost 2 will now be described. Figures 11 to 13 all illustrate the arrangement at a first instant during impact with the object 2 (although the object itself is not shown in figures 11 and 12 for purposes of clarity), whilst figures 14 and 15 each show subsequent instants during the impact. As will be appreciated, the impact depicted is representative of a so-called "small overlap" frontal impact in which the object is struck to one side of the vehicle's central longitudinal axis.

Figures 11 and 12 show the function of the impact guide 5 particularly clearly. Both of these drawings show the guide member 9 having been extended a little further outwardly from the housing 8 than depicted in figures 9 and 10, and thus represent the substantially fully deployed position of the guide member 9. As will thus be noted, in this fully deployed configuration the guide member 9 extends even further rearwardly past the front of the wheel 4 and outwardly past the side of the wheel.

Figure 13 depicts the stage of impact between the vehicle 1 and the external object 2, and it can thus be seen from this drawing that the object has penetrated the side part of the front bumper/fender 3. However, the impact guide 5, in its extended condition, presents a barrier to the encroaching external object 2 during the impact. Indeed, as will be noted in figure 12 in particular, the housing 8 of the guide member 5 is shown having been deformed via impact with the object at this stage of the crash. The housing 8 has thus already absorbed considerable energy from the crash during this deformation.

As the impact guide 5 is deformed in this way, it moves towards and makes contact with the front wheel 4, effectively forming a barrier spanning the gap between the single mounting point via which the housing 8 is fixed to the structure of the vehicle and the wheel 4 Because of the way in which the extended guide member 9 extends outwardly and rearwardly past the front edge of the wheel 4, the front of wheel is prevented from moving outwardly, whilst the external object 2 is prevented from passing inside the front edge of the wheel between the wheel and the structure of the vehicle by the barrier presented by the impact guide. Indeed, as illustrated most clearly in figure 13, the front region of the wheel 4 is instead urged inwardly towards the structure of the vehicle by contact with the deforming impact guide 5, which means that the rear part of the wheel is urged outwardly, away from the passenger compartment and the region of the vehicle structure at the base of the vehicle's A-pillar. In contrast to the crash scenario depicted in figures 1 to 4, it can thus be seen that the impact guide 5 serves to prevent the wheel 4 from penetrating the passenger compartment of the vehicle.

As can also be appreciated from figure 12 in particular, the outward and rearward angle at which the impact guide 5 is mounted to the vehicle means that when it is contacted by an external object 2 in this sort of crash, its forwardly facing and outwardly extending guide surfaces 24, 25, even if deformed as described above, serve to guide the object 2 outwardly relative to the central axis of the vehicle and past the front wheel 4. Because the guide surfaces 24, 25 are smooth along their length, the object 2 will not snag or become caught on the impact guide 5 as it slides across the guide surfaces 24, 25. This guiding of the object 2 is also shown in figures 14 and 15 which show subsequent stages during the crash. Figures 14 and 15 also show in further detail how the impact guide 5 has prevented the object 2 from driving the front wheel 4 inwardly and rearwardly towards the passenger compartment of the vehicle.

It is to be appreciated that whilst the invention has been described in detail above with specific reference only to one impact guide 5, it is envisaged that in most installations, the safety arrangement will comprise two such impact guides 5; each being mounted on a respective side of the vehicle and for actuation is an identical manner. In such an arrangement, it is proposed that the two impact guide arrangements will be configured for simultaneous actuation. However, in variants of the invention in which the sensor is capable of determining on which side of the vehicle an impact occurs, it may be possible to arrange the impact guide arrangements for independent actuation.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many variations will be apparent to those skilled in the art when given this disclosure. Accordingly, the exemplary embodiments of the invention set forth above are considered to be illustrative and not limiting. Various changes to the described embodiments may be made without departing from the scope of the invention as defined by the appended claims.

## Claims

1. A motor vehicle safety arrangement operable in the event of an impact between the vehicle (1) and an external object (2), the arrangement comprising: an impact guide (5) mounted to the structure (7) of the vehicle in a front region of the vehicle, the impact guide (5) being configured for actuation from a first configuration to a second configuration, and being arranged such that said actuation from the first configuration to the second configuration occurs in response to an actuation signal from a crash sensor, wherein when the impact guide (5) is in its actuated second configuration it presents a guide surface (24, 25) for impact with the external object (2), the guide surface (24, 25) facing outwards and extending rearwards at an acute angle relative to the central longitudinal axis (18) of the vehicle, the safety arrangement being **characterised in that** the impact guide is mounted to the structure of the vehicle (1) at a longitudinal position in front of the front wheel of the vehicle, located within a bumper (3) of the vehicle (1) and when in its second configuration part of the impact guide (9) extends rearwards past the forward-most surface (220) of the front wheel (4).

2. A safety arrangement according to claim 1, wherein said guide surface is generally smooth along its entire extent.

3. A safety arrangement according to claim 1 or claim 2, wherein actuation of the impact guide (5) involves a component of sideways movement of at least part (9) of the impact guide (5), away from the central longitudinal axis (18) of the vehicle (1).

4. A safety arrangement according to any preceding claim, wherein the impact guide (5) comprises an elongate guide member (9) and is configured such that actuation from said first configuration to said second configuration comprises movement of the elongate guide member (9) along its longitudinal axis (10).

5. A safety arrangement according to claim 4, wherein the longitudinal axis (10) of the guide member (9) is arranged at an acute angle relative to the central longitudinal axis (18) of the vehicle (1), such that movement of the guide member (9) during actuation of the impact guide (5) is outwards and rearwards relative to vehicle (1).

6. A safety arrangement according to claim 4 or claim 5, wherein the elongate guide member (9) is arranged for telescopic movement relative to a housing part (8) of the impact guide (5).

7. A safety arrangement according to claim 6, wherein said part of the impact guide is said elongate guide member (9).

8. A safety arrangement according to any preceding claim, wherein upon actuation of the impact guide (5) at least part of the impact guide (9) extends or projects outwardly from the bumper (3).

9. A safety arrangement according to any preceding claim, further comprising an actuator operably connected to a crash sensor and configured to actuate the impact guide (5) upon receipt of a crash signal from the sensor, the actuator comprising at least one of: a pyrotechnic charge, a gas generator, or a mechanical biasing and release mechanism, and optionally being reversible or resettable.

10. A safety arrangement according to any preceding claim, further comprising a crash sensor, wherein the crash sensor is either i) an impact sensor configured to detect the occurrence of an impact involving the motor vehicle, or ii) a predictive crash sensor configured to detect the likely occurrence of an impact involving the motor vehicle.

11. A safety arrangement according to any preceding claim, comprising a pair of said impact guides (5) each said impact guide being mounted on a respective side of the motor vehicle (1).

## Patentansprüche

1. Kraftfahrzeugsicherheitsanordnung, die im Fall eines Zusammenstoßes zwischen dem Fahrzeug (1) und einem Gegenstand außerhalb (2) funktionsfähig ist, wobei die Anordnung Folgendes umfasst: eine Aufprallführung (5), die an der Konstruktion (7) des Fahrzeugs in einem vorderen Bereich des Fahrzeugs angebracht ist, wobei die Aufprallführung (5) für eine Betätigung aus einer ersten Gestalt in eine zweite Gestalt vorgesehen und so angeordnet ist, dass die Betätigung aus der ersten Gestalt in die zweite Gestalt als Reaktion auf ein Auslösesignal von einem Aufprallsensor erfolgt, wobei die Aufprallführung (5), wenn sie ihre betätigte zweite Gestalt aufweist, eine Führungsfläche (24, 25) für den Zusammenstoß mit dem Gegenstand außerhalb (2) aufweist, wobei die Führungsfläche (24, 25) nach außen zeigt und unter einem spitzen Winkel bezogen auf die mittige Längsachse (18) des Fahrzeugs nach hinten verläuft, wobei die Sicherheitsanordnung **dadurch gekennzeichnet ist, dass** die Aufprallführung an der Konstruktion des Fahrzeugs (1) in einer Längsposition vor dem Vorderrad des Fahrzeugs in einem Stoßfänger (3) des Fahrzeugs (1) angebracht ist, und wenn sie ihre zweite Gestalt aufweist, ein Teil der Aufprallführung (9) an der vordersten Fläche (220) des Vorderrads (4) vorbei nach hinten verläuft.

2. Sicherheitsanordnung nach Anspruch 1, wobei die Führungsfläche ganz allgemein entlang ihrer gesamten Ausdehnung glatt ist.

3. Sicherheitsanordnung nach Anspruch 1 oder Anspruch 2, wobei die Betätigung der Aufprallführung (5) einen Anteil einer Seitwärtsbewegung von zumindest einem Teil (9) der Aufprallführung (5) weg von der mittigen Längsachse (18) des Fahrzeugs (1) beinhaltet.

4. Sicherheitsanordnung nach einem vorhergehenden Anspruch, wobei die Aufprallführung (5) ein längliches Führungselement (9) umfasst und so eingerichtet ist, dass die Betätigung aus der ersten Gestalt in die zweite Gestalt eine Bewegung des länglichen Führungselements (9) entlang seiner Längsachse (10) umfasst.

5. Sicherheitsanordnung nach Anspruch 4, wobei die Längsachse (10) des Führungselements (9) unter einem spitzen Winkel bezogen auf die mittige Längsachse (18) des Fahrzeugs (1) derart angeordnet ist, dass die Bewegung des Führungselements (9) während der Betätigung der Aufprallführung (5) bezogen auf das Fahrzeug (1) nach außen und hinten erfolgt.

6. Sicherheitsanordnung nach Anspruch 4 oder Anspruch 5, wobei das längliche Führungselement (9) für eine Teleskopbewegung bezogen auf einen Gehäuseteil (8) der Aufprallführung (5) vorgesehen ist.

7. Sicherheitsanordnung nach Anspruch 6, wobei es sich bei dem Teil der Aufprallführung um das längliche Führungselement (9) handelt.

8. Sicherheitsanordnung nach einem vorhergehenden Anspruch, wobei bei Betätigung der Aufprallführung (5) zumindest ein Teil der Aufprallführung (9) von dem Stoßfänger (3) aus nach außen verläuft oder ragt.

9. Sicherheitsanordnung nach einem vorhergehenden Anspruch, die ferner ein Stellglied umfasst, das funktionsfähig mit einem Aufprallsensor verbunden und so eingerichtet ist, dass es die Aufprallführung (5) beim Empfang eines Aufprallsignals von dem Sensor betätigt, wobei das Stellglied mindestens eins aus Folgendem umfasst: einen pyrotechnischen Satz, einen Gasgenerator oder einen mechanischen Vorspann- und Freigabemechanismus, sowie optional reversibel oder rückstellbar ist.

10. Sicherheitsanordnung nach einem vorhergehenden Anspruch, die ferner einen Aufprallsensor umfasst, wobei es sich bei dem Aufprallsensor entweder um i) einen Crash-Sensor handelt, der so eingerichtet ist, dass er das Auftreten eines Aufpralls erfasst, an dem das Kraftfahrzeug beteiligt ist, oder um ii) einen prädiktiven Aufprallsensor, der so eingerichtet ist, dass er das wahrscheinliche Auftreten eines Aufpralls erfasst, an dem das Kraftfahrzeug beteiligt ist.

11. Sicherheitsanordnung nach einem vorhergehenden Anspruch, die ein Paar der Aufprallführungen (5) umfasst, wobei jede Aufprallführung an einer jeweiligen Seite des Kraftfahrzeugs (1) angebracht ist.

## Revendications

1. Agencement de sécurité de véhicule à moteur pouvant fonctionner dans le cas d'un impact entre le véhicule (1) et un objet extérieur (2), l'agencement comprenant : un guide d'impact (5) monté sur la structure (7) du véhicule dans une zone avant du véhicule, le guide d'impact (5) étant configuré pour un actionnement d'une première configuration à une seconde configuration, et étant agencé de sorte que ledit actionnement de la première configuration à la seconde configuration a lieu en réaction à un signal d'actionnement d'un capteur de choc, dans lequel, quand le guide d'impact (5) est dans sa seconde configuration actionnée, il présente une surface de guidage (24, 25) pour l'impact avec l'objet extérieur (2), la surface de guidage (24, 25) étant orientée vers l'extérieur et s'étendant vers l'arrière à un angle aigu par rapport à l'axe longitudinal central (18) du véhicule, l'agencement de sécurité étant **caractérisé en ce que** le guide d'impact est monté sur la structure du véhicule (1) dans une position longitudinale devant la roue avant du véhicule, située dans un pare-chocs (3) du véhicule (1) et quand il est dans sa seconde configuration, une partie du guide d'impact (9) s'étend vers l'arrière au-delà de la surface la plus en avant (220) de la roue avant (4).

2. Agencement de sécurité selon la revendication 1, dans lequel ladite surface de guidage est généralement lisse tout au long de son étendue.

3. Agencement de sécurité selon la revendication 1 ou la revendication 2, dans lequel l'actionnement du guide d'impact (5) implique une composante de mouvement latéral d'au moins une partie (9) du guide d'impact (5), s'éloignant de l'axe longitudinal central (18) du véhicule (1).

4. Agencement de sécurité selon une quelconque revendication précédente, dans lequel le guide d'impact (5) comprend un élément de guidage allongé (9) et est configuré de sorte que l'actionnement de ladite première configuration à ladite seconde configuration comprend un mouvement de l'élément de guidage allongé (9) le long de son axe longitudinal (10).

5. Agencement de sécurité selon la revendication 4, dans lequel l'axe longitudinal (10) de l'élément de guidage (9) est agencé à un angle aigu par rapport à l'axe longitudinal central (18) du véhicule (1), de sorte que le mouvement de l'élément de guidage (9) pendant l'actionnement du guide d'impact (5) se fait vers l'extérieur et vers l'arrière par rapport au véhicule (1).

6. Agencement de sécurité selon la revendication 4 ou la revendication 5, dans lequel l'élément de guidage allongé (9) est agencé pour un mouvement télescopique par rapport à une partie de boîtier (8) du guide d'impact (5).

7. Agencement de sécurité selon la revendication 6, dans lequel ladite partie du guide d'impact est ledit élément de guidage allongé (9).

8. Agencement de sécurité selon une quelconque revendication précédente, dans lequel lors de l'actionnement du guide d'impact (5) au moins une partie du guide d'impact (9) s'étend ou dépasse du pare-chocs (3) vers l'extérieur.

9. Agencement de sécurité selon une quelconque revendication précédente, comprenant en outre un actionneur relié de manière fonctionnelle à un capteur de choc et configuré pour actionner le guide d'impact (5) lors de la réception d'un signal de choc venant du capteur, l'actionneur comprenant au moins l'un des éléments suivants : une charge pyrotechnique, un générateur de gaz, ou un mécanisme de précontrainte et de relâchement mécanique, et étant en option réversible ou réinitialisable.

10. Agencement de sécurité selon une quelconque revendication précédente, comprenant en outre un capteur de choc, dans lequel le capteur de choc est soit i) un capteur d'impact configuré pour détecter l'occurrence d'un impact impliquant le véhicule à moteur, soit ii) un capteur de choc prédictif configuré pour détecter l'occurrence probable d'un impact impliquant le véhicule à moteur.

11. Dispositif de sécurité selon une quelconque revendication précédente, comprenant une paire desdits guides d'impact (5), chaque dit guide d'impact étant monté sur un côté respectif du véhicule à moteur (1).
